(19) **Europäisches Patentamt / European Patent Office / Office européen des brevets**

(11) **EP 4 661 396 A1**

(12) **EUROPEAN PATENT APPLICATION**

(43) Date of publication:
**10.12.2025 Bulletin 2025/50**

(21) Application number: **24305893.0**

(22) Date of filing: **06.06.2024**

(51) International Patent Classification (IPC):
**H04N 19/12** (2014.01)     **H04N 19/157** (2014.01)
**H04N 19/176** (2014.01)    **H04N 19/593** (2014.01)
**H04N 19/70** (2014.01)

(52) Cooperative Patent Classification (CPC):
**H04N 19/12; H04N 19/122; H04N 19/157;**
**H04N 19/176; H04N 19/593; H04N 19/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **BONNINEAU, Charles**
  **MONTREAL, H2J 1G1 (CA)**
• **PURI, Saurabh**
  **SAINT-LAZARE, J7T 0P6 (CA)**
• **NASER, Karam**
  **35250 MOUAZE (FR)**
• **LE LEANNEC, Fabrice**
  **35830 BETTON (FR)**

(74) Representative: **Interdigital Immeuble ZEN 2 845 A, avenue des Champs Blancs 35510 Cesson-Sévigné (FR)**

(54) **LOW COMPLEXITY MULTIPLE TRANSFORM SET SELECTION**

(57) Methods for encoding or decoding a block of a video and corresponding apparatuses are provided wherein the block is encoded or decoded using a transform kernel selected in an alternative transform set. To reduce complexity at the encoder and signaling cost, a number of tranform kernels in the alternative transform set is reduced based on at least one of a coding mode of the block, a size of the block or an absolute sum of transformed coefficients obtained for the block. In some variants, usage of the alternative transform set is also controlled by at least one of of a coding mode of the block, a size of the block or an absolute sum of transformed coefficients obtained for the block.

| | |
|---|---|
| Obtain the residual coefficients | 1410 |
| Compute the VIPM1 and VIPM2 | 1420 |
| Obtaining a first transform set and an alternative transform set | 1430 |
| Perform RDO to select the best NSPT in the first transform set or in the alternative transform set | 1440 |
| Obtain the transform coefficient using the selected kernel | 1450 |
| Transmit the index to the decoder | 1460 |

FIG. 14

EP 4 661 396 A1

**Description**

TECHNICAL FIELD

The present embodiments generally relate to a method and an apparatus for transform coding in video encoding and decoding.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

According to an embodiment, a method of encoding is provided, comprising obtaining a first intra prediction mode and a second intra prediction mode for a block of a picture, a first transform set being associated to the first intra prediction mode, obtaining an alternative transform set using at least the second intra prediction mode, wherein a number of transform kernels in the alternative transform set depends on at least one of a coding mode of the block or a size of the block; determining a transform kernel from one of the first transform set or the alternative transform set; and encoding said block based on said transform kernel.

According to another embodiment, a method of decoding is provided, comprising obtaining a first intra prediction mode and a second intra prediction mode for a block of a picture, a first transform set being associated to the first intra prediction mode, obtaining an alternative transform set using at least the second intra prediction mode, wherein a number of transform kernels in the alternative transform set depends on at least one of a coding mode of the block or a size of the block; determining a transform kernel from one of the first transform set or the alternative transform set; and decoding said block based on said transform kernel.

According to another embodiment, an apparatus for encoding is provided, comprising one or more processors configured to comprising obtain a first intra prediction mode and a second intra prediction mode for a block of a picture, a first transform set being associated to the first intra prediction mode, obtain an alternative transform set using at least the second intra prediction mode, wherein a number of transform kernels in the alternative transform set depends on at least one of a coding mode of the block or a size of the block; determine a transform kernel from one of the first transform set or the alternative transform set; and encode said block based on said transform kernel.

According to another embodiment, an apparatus for decoding is provided, comprising one or more processors configured to obtain a first intra prediction mode and a second intra prediction mode for a block of a picture, a first transform set being associated to the first intra prediction mode, obtain an alternative transform set using at least the second intra prediction mode, wherein a number of transform kernels in the alternative transform set depends on at least one of a coding mode of the block or a size of the block; determine a transform kernel from one of the first transform set or the alternative transform set; and decode said block based on said transform kernel.

One or more embodiments also provide a computer program comprising instructions which when executed by one or more processors cause the one or more processors to perform the method according to any of the embodiments described herein. One or more of the present embodiments also provide a computer readable storage medium having stored thereon instructions for processing video data according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.
FIG. 2 illustrates a block diagram of an embodiment of a video encoder.
FIG. 3 illustrates a block diagram of an embodiment of a video decoder.
FIG. 4 illustrates an example of explicit MTS set selection in ECM (modeldx = 4 and sizeldx = 0).

FIG. 5. illustrates the ROI (Region-Of-Interest) for LFNST16.

FIG. 6 illustrates the ROI for LFNST8.

FIG. 7 illustrates that NSPT is applied to small blocks, while LFNST is applied for the rest.

FIG. 8 illustrates a LFNST/NSPT LUT with corresponding planar, VIPM1 and VIPM2 transform sets.

FIG. 9 illustrates that a TU's final transform set is generated based on predetermined fusion of planar, VIPM1 and VIPM2 transform sets.

FIG. 10 illustrates a method of constructing the final transform set.

FIG. 11 illustrates an encoding method in the case of NSPT, using the final transform set.

FIG. 12 illustrates a decoding method in the case of NSPT, using the final transform set.

FIG. 13 illustrates another example wherein a TU's final transform set is generated based on dynamic fusion of planar, VIPM1 and VIPM2 transform sets.

FIG. 14 illustrates an encoding method in the case of NSPT, using at least one of a first transform set or an alternative transform set, according to an embodiment.

FIG. 15 illustrates a decoding method in the case of NSPT, using at least one of a first transform set or an alternative transform set, according to an embodiment.

FIG. 16 illustrates an encoding method in the case of NSPT, using an alternative transform set, according to an embodiment.

FIG. 17 illustrates a decoding method in the case of NSPT, using an alternative transform set, according to an embodiment.

FIG. 18 illustrates an encoding method wherein MTSS or MTSF is adaptively enabled, according to an embodiment.

FIG. 19 illustrates a decoding method wherein MTSS or MTSF is adaptively enabled, according to an embodiment.

FIG. 20 illustrates a process for determining whether or not a transform candidate selected by MTSS is valid, according to an embodiment.

## DETAILED DESCRIPTION

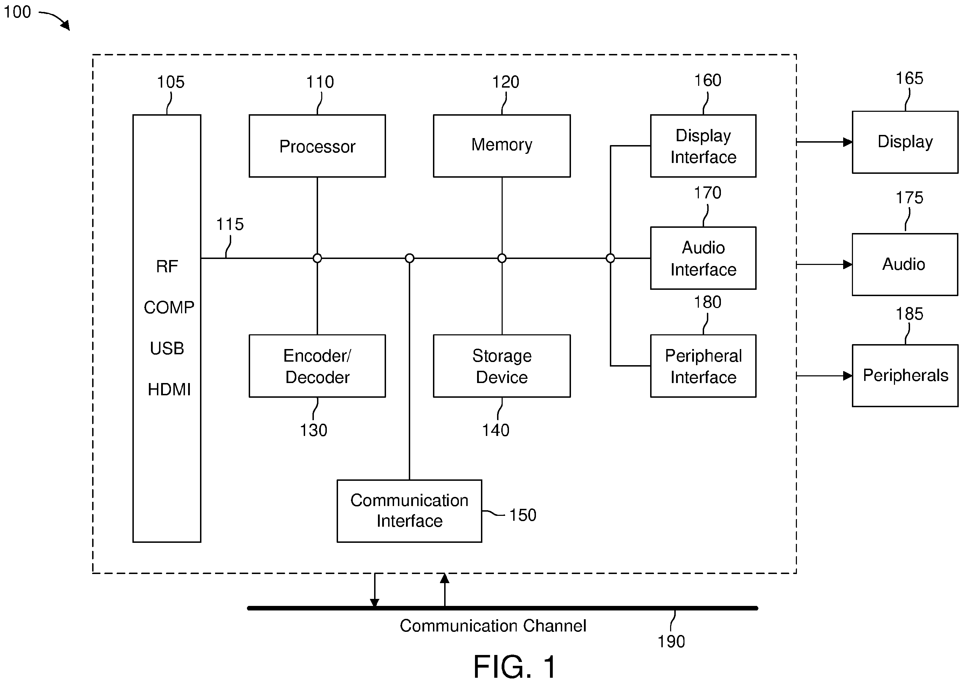

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

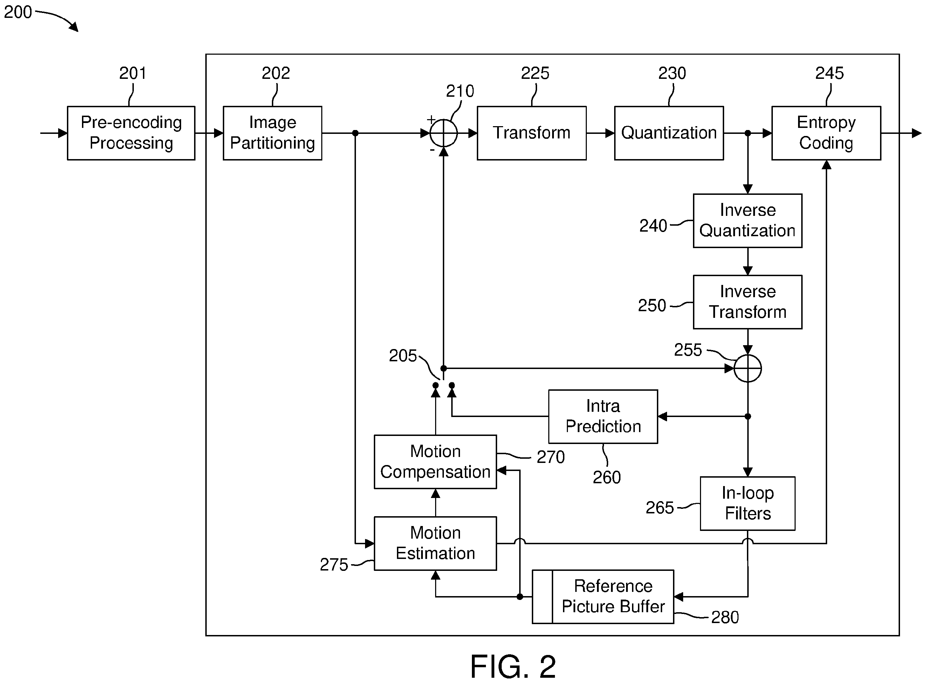

FIG. 2 illustrates an example of a block-based hybrid video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the encoder 200, a picture is encoded by the encoder elements as described below. The picture to be encoded is partitioned (202) and processed in units of, for example, CUs (Coding Units). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements such as the picture partitioning information, are entropy coded (245) to output a bitstream. As a non-limiting example, context-based adaptive binary arithmetic coding (CABAC) can be used to encode syntax elements into the bitstream.

The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filter) filtering to reduce encoding artifacts. The filtered image is stored in a reference picture buffer (280).

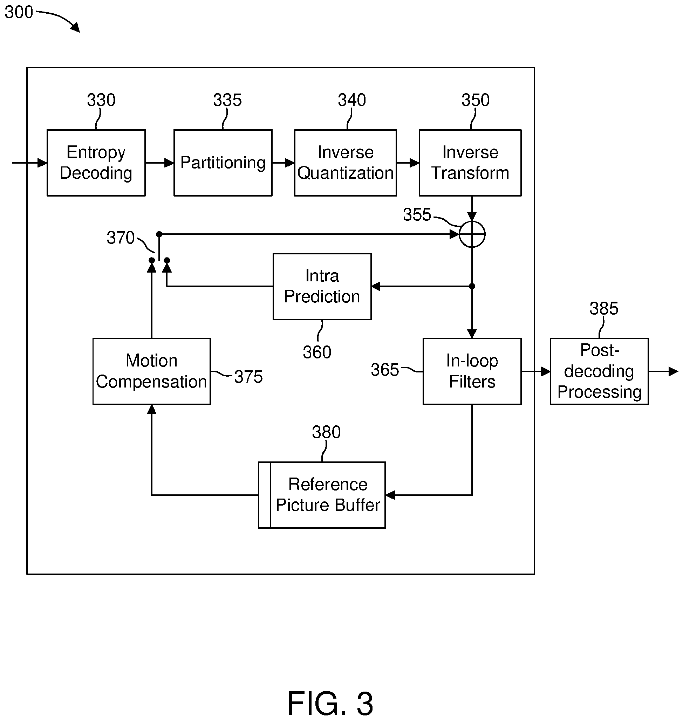

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

The selection of transform in ECM (Enhanced Compression Model) depends on the intra prediction mode of the current block. The intra prediction mode acts as input to a lookup table (LUT) to get a suitable transform set for the block. This is done to take advantage of the correlation between the directional intra mode and residuals type as residual samples tend to have larger absolute values when they are far away from the reference samples.

To deduce the intra mode for transform selection for non-directional modes, such as MIP (Matrix weighted Intra Prediction), IntraTMP (Intra Template Matching Prediction), IBC (Intra Block Copy), and inter blocks, some methods have been proposed. For example, the DIMD (Decoder Side Intra Mode Derivation) mode is used to derive a virtual intra prediction mode (VIPM) for these modes to select the appropriate MTS (Multiple Transform Set) and LFNST (Low-Frequency Non-Separable Transform)/NSPT (Non-Separable Primary Transform) transform sets. Note that a VIPM is an angular intra prediction mode, DC or planar mode. Here, an angular mode means a directional intra prediction mode. Planar and DC can be referred as non-angular modes. The VIPM mode is derived to indicate the characteristics of the prediction residuals and therefore is used to indicate the transform set selection, even though the VPM mode is not used for actual encoding. However, since the transform sets are defined based on intra prediction modes, including angular modes, planar mode and DC mode, the VIPM may not always provide the best transform set for the current block as it does not reflect the type of residual for blocks not encoded in angular, DC or planar intra prediction modes.

To improve the performance, multiple transform set selection (MTSS) has been proposed in F. Wang, et. al., "Non-EE2: Multiple Transform Set Selection for LFNST/NSPT" JVET-AG0062, January 2024, where an additional transform set is tested in addition to the initial one for modes relying on VIPM for LFNST/NSPT. In this approach, the LFNST/NSPT kernels from both the alternative transform set and the initial transform sets are tested. Then, the selected transform set and the index of LFNST/NSPT kernel in the selected transform set are signalled to the decoder. A similar approach has been proposed for intra MTS in C. Bonnineau, et. al., "AHG12: Multiple Transform Set Selection for intra MTS" JVET-AH0307, April 2024, for which a mechanism based on LUT is used for primary transform pair selection.

Although improving the RD performance, using MTSS generates a significant increase in encoder complexity as twice as many transforms are tested during RD optimization. This document proposes several solutions to reduce the encoder complexity in MTSS while maintaining the RD performance offered by this tool.

Intra Prediction in ECM 10 (Enhanced Compression Model 10)

To capture the arbitrary edge directions presented in natural video, ECM features 65 directional intra prediction modes as in VVC. For predicting blocks with smoothly varying textures, the PLANAR and DC modes are used.

When DIMD (Decoder Side Intra Mode Derivation) is applied, a horizontal gradient and a vertical gradient are calculated for each sample in a template of reconstructed neighbor samples to build a Histogram of Gradients (HoG). Up to five intra modes are derived from the gradients, and those five predictors are combined with the planar mode predictor with weights derived from the histogram of gradients.

When used, TIMD (Template-based Intra Mode Derivation) is applied the same way on the encoder and decoder sides. For each intra prediction mode in the MPM list of the current block, if needed, supplemented with default modes, it computes a prediction of the template of the block from the decoded reference samples of the template, and the SATD (Sum of Absolute Transformed Differences) between this prediction and the template of the block is calculated. The two intra prediction modes with the minimum SATDs are selected as the TIMD modes.

Intra template matching prediction (IntraTMP) is an intra prediction mode that copies a prediction block from the reconstructed part of the current frame, whose L-shaped template most closely matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

In Intra Block Copy (IBC), the prediction is obtained from a reference block within the same picture indicated by a block vector.

To predict the samples of a block of width W and height H, Matrix weighted Intra Prediction (MIP) takes one line of H reconstructed neighboring boundary samples left of the block and one line of W reconstructed neighboring boundary samples above the block as input. The generation of the prediction signal is based on averaging neighboring samples, matrix vector multiplication with the averaged samples and linear interpolation.

Spatial geometric partitioning mode (SGPM) is an intra mode that resembles the inter coding tool of geometric partitioning mode (GPM), where the two prediction parts are generated from the intra predicted process. In this mode, a candidate list is built with each entry containing one partition split and two intra prediction modes. The selected candidate index is signalled.

Intra MTS in ECM

In the VVC design, DST7 and DCT8 transform kernels are used in addition to DCT2. These kernels are used for intra and inter coding. Transform skip may also be used. In VVC, the primary transforms are separable transforms. Five different transform pairs (a pair of horizontal transform and vertical transform) are supported, including (DCT2, DCT2) and four MTS (Multiple Transform Selection) mode combinations, i.e., (DST7, DST7), (DST7, DCT8), (DCT8, DST7) and (DCT8, DCT8).

In ECM, additional primary transforms including DCT5, DST4, DST1, and identity transform (IDT) are employed. Also MTS sets are made dependent on the TU size and intra mode information. For blocks predicted via IntraTMP, the DIMD process is used on the prediction block to derive an intra mode that is used for transform selection. Specifically, a horizontal gradient and a vertical gradient are calculated for each predicted sample to build a Histogram of Gradients (HoG). Then the intra prediction mode with the largest histogram amplitude value (VIPM), is used to determine the MTS transform set (a set of possible transform pairs).

Overall, 16 different TU sizes are considered, and for each TU size, 5 different classes are considered depending on intra-mode information. For each class, 1, 4 or 6 different transform pairs (MTS candidates) are considered in the MTS transform set. The number of intra MTS candidates is adaptively selected (between 1, 4 and 6 MTS candidates) depending on the sum of absolute value of transform coefficients. The sum is compared against two fixed thresholds to determine the total number of allowed MTS candidates:

$$\text{total number of allowed MTS candidates} = \begin{cases} 1, \text{if sum} \leq \text{th0} \\ 4, \text{if th0} < \text{sum} \leq \text{th1} \\ 6, \text{if sum} > \text{th1} \end{cases}$$

Although a total of 80 (16 transform sizes times 5 classes) different classes are considered, some of these classes may share a same transform set. In ECM, there are 58 (less than 80) unique entries in the resultant look-up table (LUT).

For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, for a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80. In addition, a dedicated mode index is assigned to MIP, resulting in a total of 36 possible modes entries in the LUT.

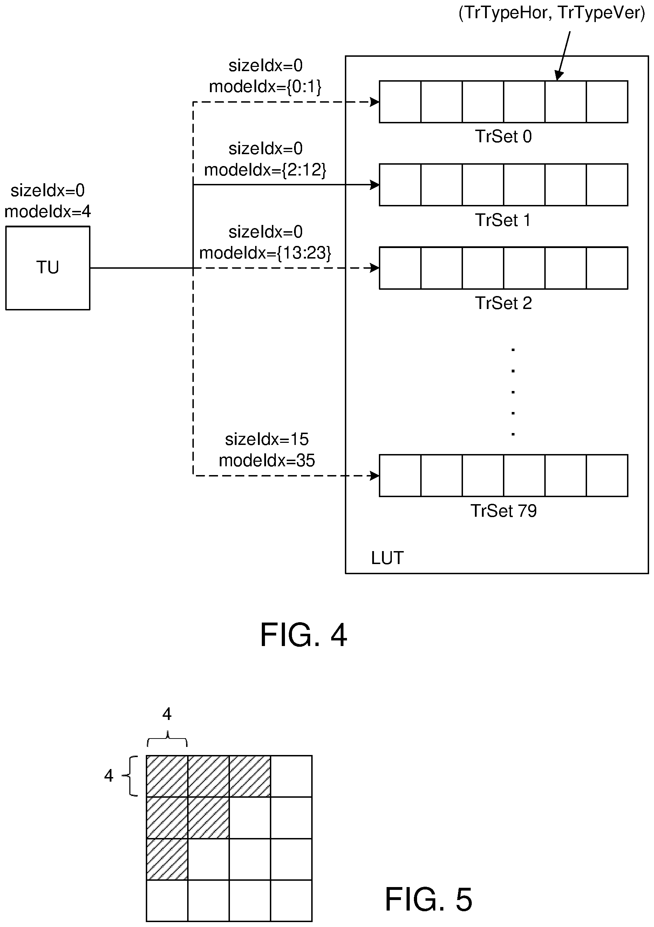

An example of transform set selection in the LUT for a given TU size and intra mode is illustrated in FIG. 4, where a transform set (TrSet i) is selected based on the TU size (sizeIdx) and the intra mode (modeIdx).

IDT is applied for blocks that are 16x16 or smaller and have intra modes within the proximity of horizontal and vertical intra directions, where the proximity is defined by a threshold that depends on the block size. If the transform index is equal to 3 and a block satisfies the above condition, the horizontal and/or vertical identity transform is applied.

LFNST in ECM

The transformed coefficients from the primary transform can be further transformed with a non-separable transform applied to the low frequency part. This is known as low-frequency non-separable transform (LFNST). The main idea of this transform stage is to further remove signal redundancies that are not captured by the separable two-dimensional first stage transform (DCT-II and MTS). The transform matrices are derived from offline training by minimizing the correlation between transform coefficients, using principal component analysis.

In VVC, 4 transform sets and 2 non-separable transform matrices/kernels (candidates) per transform set are used in LFNST. The mapping from the intra prediction mode to the transform set is pre-defined. For each LFNST transform set, the selected non-separable secondary transform candidate is further specified by the explicitly signalled LFNST index.

In ECM, the LFNST design in VVC is extended as follows:

• The number of LFNST sets (N) and candidates (C) in a set are extended to N = 35 and C = 3, and the LFNST set (lfnstTrSetIdx) for a given intra mode (predModeIntra) is derived according to the following formula:

   ◦ For predModeIntra < 2, lfnstTrSetIdx is equal to 2
   ◦ lfnstTrSetIdx = predModeIntra, for predModeIntra in [2,34]
   ◦ lfnstTrSetIdx = 68 - predModeIntra, for predModeIntra in [35,66]

• Three different kernels, LFNST4, LFNST8, and LFNST16, are defined to indicate LFNST kernel sets, which are applied to 4xN/Nx4 (N≥4), 8xN/Nx8 (N≥8), and MxN (M, N≥16), respectively.

The mapping from intra prediction modes to these sets is shown in Table 1.

Table 1. Mapping of intra prediction modes to LFNST set index

| Intra pred mode | -14 | -13 | -12 | -11 | -10 | -9 | -8 | -7 | -6 | -5 | -4 | -3 | -2 | -1 |
|---|---|---|---|---|---|---|---|---|---|---|---|---|---|---|

(continued)

| LFNST set index | 2 | 2 | 2 | 2 | 2 | 2 | 2 | 2 | 2 | 2 | 2 | 2 | 2 | 2 |
|---|---|---|---|---|---|---|---|---|---|---|---|---|---|---|
| Intra pred mode | 0 | 1 | 2 | 3 | 4 | 5 | 6 | 7 | 8 | 9 | 10 | 11 | 12 | 13 |
| LFNST set index | 0 | 1 | 2 | 3 | 4 | 5 | 6 | 7 | 8 | 9 | 10 | 11 | 12 | 13 |
| Intra pred mode | 14 | 15 | 16 | 17 | 18 | 19 | 20 | 21 | 22 | 23 | 24 | 25 | 26 | 27 |
| LFNST set index | 14 | 15 | 16 | 17 | 18 | 19 | 20 | 21 | 22 | 23 | 24 | 25 | 26 | 27 |
| Intra pred mode | 28 | 29 | 30 | 31 | 32 | 33 | 34 | 35 | 36 | 37 | 38 | 39 | 40 | 41 |
| LFNST set index | 28 | 29 | 30 | 31 | 32 | 33 | 34 | 33 | 32 | 31 | 30 | 29 | 28 | 27 |
| Intra pred mode | 42 | 43 | 44 | 45 | 46 | 47 | 48 | 49 | 50 | 51 | 52 | 53 | 54 | 55 |
| LFNST set index | 26 | 25 | 24 | 23 | 22 | 21 | 20 | 19 | 18 | 17 | 16 | 15 | 14 | 13 |
| Intra pred mode | 56 | 57 | 58 | 59 | 60 | 61 | 62 | 63 | 64 | 65 | 66 | 67 | 68 | 69 |
| LFNST set index | 12 | 11 | 10 | 9 | 8 | 7 | 6 | 5 | 4 | 3 | 2 | 2 | 2 | 2 |
| Intra pred mode | 70 | 71 | 72 | 73 | 74 | 75 | 76 | 77 | 78 | 79 | 80 | | | |
| LFNST set index | 2 | 2 | 2 | 2 | 2 | 2 | 2 | 2 | 2 | 2 | 2 | | | |

The kernel dimensions are specified by:

$$(LFSNT4, LFNST8^{*}, LFNST16^{*}) = (16\text{x}16, 32\text{x}64, 32\text{x}96)$$

The forward LFNST is applied to the top-left low frequency region, which is called Region-Of-Interest (ROI). When LFNST is applied, primary-transformed coefficients that exist in the region other than ROI are zeroed out, which is not changed from the VVC standard.

The ROI for LFNST16 is depicted in FIG. 5. It consists of six 4x4 sub-blocks, which are consecutive in scan order. Since the number of input samples is 96, the transform matrix for forward LFNST16 can be Rx96. R is chosen to be 32 in ECM, that is, 32 coefficients (two 4x4 sub-blocks) are generated from forward LFNST16 accordingly, which are placed following the coefficient scan order.

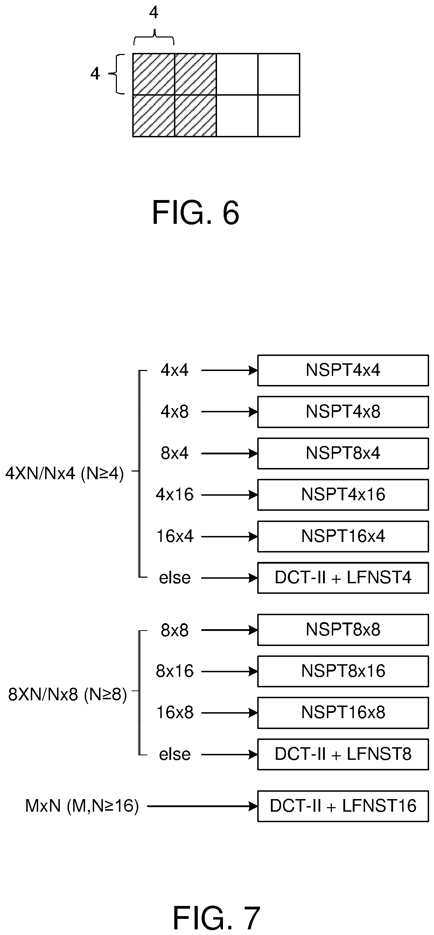

The ROI for LFNST8 is shown in FIG. 6. The forward LFNST8 matrix can be Rx64 and R is chosen to be 32. The generated coefficients are located in the same manner as with LFNST16.

NSPT in ECM

NSPT (Non-Separable Primary Transform) is designed to replace the 2 stages of transform (DCT2 followed by LFNST) by a single non-separable transform. This is only allowed for small blocks as indicated in FIG. 7.

All NSPTs consist of 35 sets and 3 candidates in a set (similar to the current LFNST). The kernels of NSPT have the following shapes:

- NSPT4x4: 16x16

- NSPT4x8/NSPT8x4: 32x20

- NSPT8x8: 64x32

- NSPT4x16/NSPT16x4: 64x24

- NSPT8x16/NSPT16x8: 128x40

Therefore, 12, 32, 40 and 88 coefficients are zeroed out using NSPT4x8/NSPT8x4, NSPT8x8, NSPT4x16/NSPT16x4 and NSPT8x16/NSPT16x8, respectively.

Multiple transform set selection for LFNST/NSPT

In ECM, the LFNST/NSPT transform set is implicitly decided by an intra prediction mode (IPM). For a block coded with PLANAR, DC or directional modes, the IPM is set as the intra prediction mode itself. For a DIMD coded block, the IPM (VIPM for transform selection) is set as the best mode derived by the DIMD process with neighboring reconstructed pixels. For a TIMD coded block, the IPM (VIPM for transform selection) is set as the best mode derived by the TIMD process. For a MIP or IntraTMP coded block, the IPM (VIPM for transform selection) is set as the best mode derived by the DIMD process with the prediction. For an SGPM coded block, the IPM (VIPM for transform selection) is set as the mode corresponding to the split direction of SGPM.

The prediction strategies of DIMD, TIMD, SGPM, MIP and IntraTMP are different from normal intra prediction modes like PLANAR, DC and directional modes. DIMD, TIMD, SGPM and IntraTMP allow multiple predictions combination. MIP makes the prediction using matrix calculation. IntraTMP references the reconstructed region in the current picture. The prediction residual may demonstrate different feature from the derived IPM (virtual IPM).

Multiple transform set selection (MTSS) allows CUs coded with DIMD, TIMD, MIP, SGPM and IntraTMP to select one LFNST/NSPT transform set out of 2 candidate sets. If (1) the current block is coded with DIMD, TIMD, MIP, SGPM, or IntraTMP, and (2) LFNST/NSPT is used, one more bin is employed to indicate whether the first or the second candidate transform set is selected. The first candidate transform set remains the same as the current ECM. The second candidate corresponds to another IPM derived by the DIMD process with neighboring reconstructed pixels. Specially, if a TIMD coded block applies fusion, the second TIMD IPM is considered to derive the second candidate set. For an SGPM coded block, the 2 IPMs that SGPM uses is considered to derive the second candidate set. The difference between the first and second IPMs should be larger than 4 to keep the diversity.

Multiple transform set fusion

Several solutions are described below to select transforms across different transform sets without additional encoder complexity using multiple transform set fusion (MTSF). The MTSF method combines several transform sets (i.e., VIPMs and planar mode transform sets) to introduce diversity in the transform selection process for modes that are not angular, planar or DC modes without extra encoder complexity and signaling cost. Specifically, the transform set selection process is enhanced for modes that are not angular, planar or DC modes, such as MIP, DIMD, TIMD (Template-based Intra Mode Derivation), SGPM (Spatial Geometric Partitioning Mode), IntraTMP, IBC, and inter blocks.

For angular intra prediction modes, residual characteristics have a significant correlation with the intra mode of the block. When samples are farther from the reference samples, they tend to have larger absolute values, which is not the case for residuals from inter, IBC, MIP, and IntraTMP modes. Therefore, the VIPM used to select the LFNST/NSPT transform set for these blocks does not reflect the characteristics of the residual as well as angular intra prediction mode. To solve this, selecting the best transform sets across multiple ones can be considered, as detailed above. However, this method introduces additional encoder complexity as the number of LFNST/NSPT RD checks increases from 3 to 6 for blocks using multiple transform set selection (MTSS). Additionally, it also requires additional signaling because the best transform set index must be signaled to the decoder.

For examle, multiple transform set fusion (MTSF) can be used to replace MTSS. No additional RD checks are performed for modes using MTSF, and no signaling is required to indicate which transform set has been selected by the encoder.

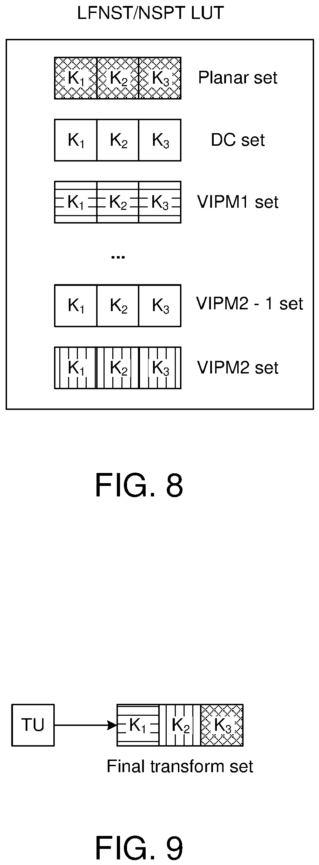

The transform set fusion is composed of kernels from different transform sets. In the following, three transform sets are used in the examples. However, the method can be applied to another number of transform sets. The transform sets that are considered are VIPM1 transform set (i.e., transform set corresponding to the VPM1 intra mode), VIPM2 transform set (transform set corresponding to the VPM2 intra mode) and planar transform set (transform set corresponding to the planar mode), as illustrated in FIG. 8. The detail on VIPM1 and VIPM2 regarding each prediction mode is given in Table 2. Here, "2nd IPM in DIMD HoG" refers to the intra prediction mode with the second largest histogram amplitude value in DIMD HoG.

Table 2. IPM used as VIPM1 and VIPM2 regarding the prediction mode.

| Prediction mode | VIPM1 | VIPM2 |
|---|---|---|
| DIMD | DIMD derived IPM | 2nd IPM in DIMD HoG |
| TIMD | 1st TIMD derived IPM | 2nd TIMD derived IPM |
| SGPM | Split direction | 1st or 2nd SGPM partition IPM |
| MIP | DIMD derived IPM | 2nd IPM in DIMD HoG |
| IntraTMP | DIMD derived IPM | 2nd IPM in DIMD HoG |
| IBC | DIMD derived IPM | 2nd IPM in DIMD HoG |

(continued)

| Prediction mode | VIPM1 | VIPM2 |
|---|---|---|
| Inter | DIMD derived IPM | 2nd IPM in DIMD HoG |

In one example, the fusion of transform sets is predetermined and fixed. If the TU is using MTSF, one kernel from each transform set is selected in a specific order (fusion order) to create the final transform set. Here, the fusion order, as well as which kernel is selected from each transform set (kernel choice), is known by the decoder to avoid signaling. For example, in FIG. 9, the first kernel K1 in the final transform set is the first kernel from the VIPM1 set, the second kernel K2 in the final transform set is the second kernel from the VIPM2 set, and the third kernel K3 in the final transform set is the third kernel from the planar set.

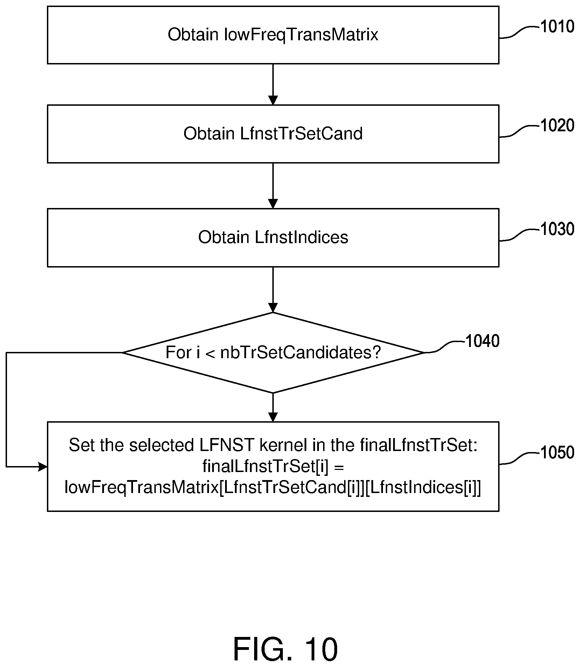

FIG. 10 illustrates a method of reconstructing the final transform set, according to this example. The method illustrated in FIG. 10 can be used at the encoder or decoder. In particular, at step 1010, the encoder or decoder obtains a LFNST or NSPT matrices lookup table lowFreqTransMatrix[n][m] containing LFNST or NSPT kernels, which are 2D matrices, with $n = 0, ..., N - 1$ and $m = 0, ..., C - 1$, where C specifies the number of kernels per LFNST or NSPT transform set and N specifies the number of LFNST or NSPT transform sets in the lookup table. At step 1020, it obtains a list of transform set candidates LfnstTrSetCand[i] indicating the fusion order, with $i = 0, ..., nbTrSetCandidates - 1$, whose possible values are in {0, 1, 2, ..., N -1}, where nbTrSetCandidates specifies the number of transform kernels in the final transform set. At step 1030, it obtains a list of transform indices LfnstIndices[i] indicating which kernel is selected from each transform set, with $i = 0, ..., nbTrSetCandidates - 1$, whose possible values are in {0, 1, 2, ..., C - 1}. For each candidate position in the final transform set (1040), the selected LFNST or NSPT kernel is placed (1050) in the array finalLfnstTrSet: finalLfnstTrSet[i] = lowFreqTransMatrix[LfnstTrSetCand[i]][LfnstIndices[i]]. LfnstTrSetCand and LfnstIndices are known to encoder and decoder, and there is no need for signaling in the bitstream. For the example in FIG. 9, nbTrSetCandidates = 3, LfnstTrSetCand = {VIPM1, VIPM2, Planar}, and LfnstIndices = {0, 1, 2}.

Note that the fusion order and kernel choice can be arbitrary and different from what is illustrated in FIG. 9. Note that even though in ECM, the number of kernels in the final transform set is 3, the number of kernels in the final transform set can be different than 3, for example, nbTrSetCandidates = 1, 2 or 4.

On the encoder side, VIPM1 and VIPM2 are computed for the current block to construct the final transform set. Then, the rate-distortion optimization step for LFNST/NSPT kernel selection is performed to test all candidate kernels in the final transform set, e.g., to select a kernel from K1, K2 and K3. The transformed coefficients are then obtained by applying the best LFNST/NSPT kernel, and the index of the best kernel in the set, denoted as IfnstIdx, is signaled to the decoder.

On the decoder side, VIPM1 and VIPM2 are computed for the current block. Then, the final transform set is built based on the fusion of the different transform sets. Finally, the final LFNST/NSPT kernel is selected in the transform set based on the IfnstIdx, and the corresponding transform is applied as inverse transform on the transformed coefficients.

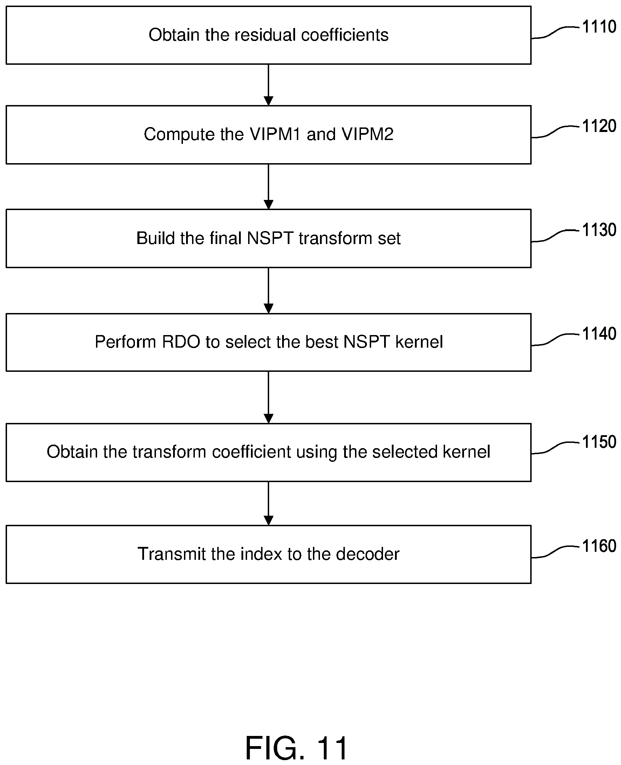

FIG. 11 illustrate an encoder in the case of NSPT using the final transform set. At step 1110, the encoder obtains the prediction residuals. At step 1120, the virtual intra prediction modes VIPM1 and VIPM2 are computed, for example, as shown in Table 2. At step 1130, the NSPT transform set is built, for example, as illustrated in FIG. 9 and FIG. 10. At step 1140, the encoder performs RDO (Rate-Distortion Optimization) to select the best NSPT kernel from the kernels in the NSPT transform set. At step 1150, the encoder transforms the prediction residuals into transform coefficients using the selected NSPT kernel. The index corresponding to the selected kernel in the final transform set is encoded at step 1160.

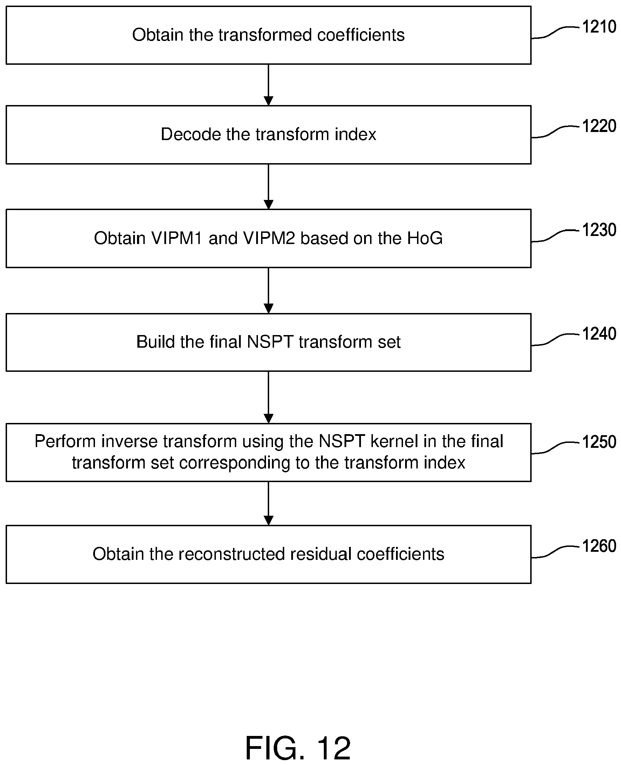

FIG. 12 illustrate a decoder in the case of NSPT, using the final transform set. At step 1210, the decoder obtains the transform coefficients. At step 1220, the decoder decodes the transform index. At step 1230, the virtual intra prediction modes VIPM1 and VIPM2 are computed, for example, as shown in Table 2. At step 1240, the NSPT transform set is built, for example, as illustrated in FIG. 9 and FIG. 10. At step 1250, the decoder performs inverse transform on the transform coefficients to obtain prediction residuals, using the NSPT kernel in the final transform set corresponding to the transform index. At step 1260, the prediction residuals are reconstructed.

In the case of LFNST, the transform operation first applies the primary forward transform to the residuals and then the selected LFNST kernel is applied to the primary transformed coefficients at step 1150. On the decoder side, the inverse transform operation first reconstructs the primary transformed coefficients with the selected LFNST kernel, then applies the primary inverse transform to obtain the residuals at step 1250.

In a variant, the fixed order in the final transform set can be modified. For instance, the order can be: {planar, VIPM1, VIPM2} instead of {VIPM1, VIPM2, planar} in FIG. 9.

In a variant, we only consider VIPM1 and planar sets for building the final transform set. For instance, one kernel is selected from the planar LFNST/NSPT set and two kernels from the LFNST/NSPT set corresponding to VIPM1.

In a variant, only if the absolute difference between VIPM1 and VIPM2 exceeds a certain threshold, the kernels from VIPM2 are considered in the fusion. Otherwise, only the kernels coming from the VIPM1 are considered.

In a variant, if the absolute difference between VIPM1 and VIPM2 exceeds a certain threshold (meaning that DIMD does not allow deriving a clear direction), we replace the VIPM2 kernel by a kernel coming from the planar set in the final transform set. For instance, one kernel is selected from the planar LFNST/NSPT set and two kernels from the LFNST/NSPT set corresponding to VIPM1. Otherwise, only the kernels coming from the VIPM1 are considered.

In a variant, the proposed approach is applied to explicit intra MTS for primary transform selection. In this case, the transform sets are composed of primary horizontal and vertical transform pairs and the index in the set is denoted as mts_idx.

Multiple transform set fusion order based on VIPM value

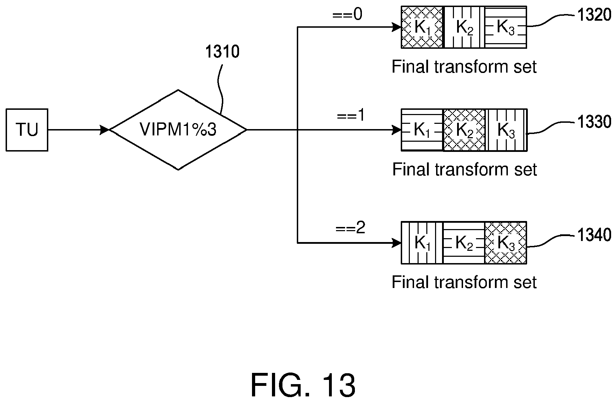

One problem with the above approach is that we always use the same LFNST/NSPT kernels from each transform set used in the fusion. In this example, the final transform set design is changed based on the VIPM1 value to avoid the same kernel from each transform set being exclusively used. Thus, the final transform set is built based on, for example, the value of VIPM1%3, as illustrated in FIG. 13, where the kernels change based on the DIMD mode, which could improve the performance as it provides additional options to the encoder.

In particular, as shown in FIG. 13, the value of VIPM1%3 is checked (1310). Depending on the value of VIPM1 % 3, the final transform set is built as follows. Note that LfnstIndices is always {0, 1, 2} in this example, but in general, they can be different.

- If VIPM1%3 = 0 (1320): LfnstTrSetCand = {Planar, VIPM2, VIPM1}, and LfnstIndices = {0, 1, 2};
- If VIPM1%3 = 1 (1330): LfnstTrSetCand = {VIPM1, Planar, VIPM2}, and LfnstIndices = {0, 1, 2};
- If VIPM1%3 = 2 (1340): LfnstTrSetCand = {VIPM2, VIPM1, Planar}, and LfnstIndices = {0, 1, 2}.

On the encoder side, the VIPM1 and VIPM2 are computed for the current block to construct the final transform set based on the value of VIPM1, as shown in FIG. 13. Then, the rate-distortion optimization step for LFNST/NSPT kernel selection is performed in the final transform set. The transformed coefficients are then obtained by applying the best LFNST/NSPT kernel, and the index of the best kernel in the set, denoted as Ifnstldx, is signaled to the decoder.

On the decoder side, the VIPM1 and VIPM2 are computed for the current block. Then, the final transform set is built based on the value of VIPM1, as shown in FIG. 13. Finally, the final LFNST/NSPT kernel is selected in the transform set based on the Ifnstldx, and the corresponding transform is applied as inverse transform on the transformed coefficients.

In a variant, we only consider VIPM1 and planar sets for building the final transform set. For instance, one kernel is selected from the planar LFNST/NSPT set and two kernels from the LFNST/NSPT set corresponding to VIPM1.

In a variant, we only consider VIPM1 and planar sets for building the final transform set. For instance, for each VIPM1 % 3 value, one kernel is selected from the planar LFNST/NSPT set and two kernels from the LFNST/NSPT set corresponding to VIPM1.

In a variant, the VIPM2 is considered in the final transform set only if the absolute difference between VIPM1 and VIPM2 indices exceeds a certain threshold. Otherwise, the kernel coming from the VIPM2 transform set is replaced in the final transform set by a kernel coming from the VIPM1.

In a variant, the proposed approach is applied to intra MTS for primary transform. In this case, the transform sets are composed of primary horizontal and vertical transform pairs and the index in the set is denoted as mts_idx.

Reduced number of candidates in the alternative transform set

As described above, for multiple transform set selection for LFNST/NSPT (also referred as MTSS), two candidate sets are used for determining a best transform kernel for the LFNST or NSPT transform for a current block. A flag is signaled to the decoder to indicate which of the first or second transform sets is used and an index is transmitted to indicate which transform kernel among the signaled transformed set. The first transform set of these two transform sets is the one obtained similarly as in the ECM, using the derived intra prediction mode for the current block, and the second transform set is an alternative transform set derived as described above using the DIMD process or depending on the coding mode (TIMD, SGPM).

With the MTSF described above, an alternative transform set is also constructed using at least one of the two candidate sets of MTSS. When MTSF is used, the transform kernel for encoding/decoding the current block is selected from this alternative transform set and only the index is transmitted to the decoder.

Reducing the number of candidates in the alternative transform set of MTSS can help to decrease the encoding runtime by reducing the number of RD checks required to find the best transform. In the meantime, it also helps to reduce the signaling cost for MTSS as fewer bits are required to code the index if the maximal number of candidates is reduced in the alternative transform set. All the variants described in this embodiment can be applied to both MTSS for LFNST/NSPT and MTSS for intra MTS.

In a similar manner, all the variants of this embodiments can be applied to the number of transform candidates in the alternative transform set obtained with the MTSF method described above. In that case, the number of candidates in the alternative transform set is no more predetermined.

Let's denote N the number of candidates in the alternative transform set. In an embodiment, the value of $N$ is made dependent on the coding mode of the current block. This could be achieved for example with a table, known both at the encoder and the decoder, where a different value of $N$ is associated to each possible mode. For instance, the alternative transform set comprises 4 candidates for DIMD, 6 candidates for TIMD, 1 candidate for MIP. Other values are also possible.

An objective is to use more candidates in the alternative transform set for modes where MTSS is more efficient. For example, for a given mode, candidates of the alternative transform set are successively checked by the RD optimization to select the best transform kernel for the current block until the number of candidates N associated to the given mode is reached.

In another variant, when the alternative transform set is obtained for example as described with FIG. 10, the number of transform kernels in the final transform set nbTrSetCandidates is dependent on the coding mode of the current block, that is the nbTrSetCandidates is no more fixed. A dedicated process can be used for each coding mode depending on nbTrSetCandidates set for the coding mode. For example, the final transform set is constructed by taking successively one kernel from each one of the input transform sets (VIPM1 set, VIPM2 set, planar set, etc) until the number of transform kernels nbTrSetCandidates is reached. For example, if nbTrSetCandidates is set to 6 for a given coding mode, using the example of FIG. 8, the first kernel K1 in the final transform set is the first kernel from the VIPM1 set, the second kernel K2 in the final transform set is the second kernel from the VIPM2 set, the third kernel K3 in the final transform set is the third kernel from the planar set, the fourth kernel K4 in the final transform set is the fourth kernel from the VIPM1 set, the fifth kernel K5 in the final transform set is the fifth kernel from the VIPM2 set and the sixth kernel K6 in the final transform set is the sixth kernel from the planar set. Other positions of the input kernel can be taken. The list of indices LfnstIndices[i] that indicates which kernel is selected from the input kernel transform sets can also be dependent on the coding mode.

In a variant of this embodiment, a high-level syntax (HLS) element can be used to control the usage of MTSS at a sequence level using an SPS flag or at a picture level using a PPS flag. In another variant, two SPS or PPS flags can be employed to control the usage of MTSS for intra and inter blocks separately.

In another variant, a separate SPS or PPS flag can be employed to control the usage of MTSS for each mode using MTSS. For example, considering a given set of coding mode, a flag is transmitted for each coding mode in the set indicating whether the MTSS is enabled or disabled for the coding mode. For example, the given set of coding mode comprises at least one of a DIMD, MIP, IntraTMP, IBC, or inter mode. The flag indicating whether MTSS is enabled or disabled then indicates whether usage of the alternative transform set is enabled or not for the coding mode.

Restriction based on block size

In another embodiment, the usage of MTSS is restricted based on the size of the block. The size s of the block can be determined by the number of pixels in the block (i.e. width $\times$ height). All the variants described in this embodiment can be applied to both MTSS for LFNST/NSPT and MTSS for intra MTS.

In a variant, the control of the usage of MTSS is based on the size of the block. MTSS can be enabled only for blocks that contain more pixels than a certain threshold, represented by $Th_s$. In other words, MTSS is enabled for blocks verifying: $s > Th_s$. If $s \leq Th_s$ then MTSS is disabled for the block.

This condition is set because the cost of sending a flag in MTSS is relatively high compared to the number of coefficients for small blocks, resulting in a large signaling overhead. Limiting the usage of MTSS to large blocks also helps in reducing the encoder complexity by limiting the total number of RD checks. Therefore, by disabling MTSS for small blocks, both the encoding time and signaling cost can be reduced.

In this embodiment, $Th_s$ can be dependent on the coding mode. For instance, $Th_s$ can be set to 128 for blocks coded using MIP and 256 for the other coding modes using MTSS. This variant allows limiting the restriction for coding modes where MTSS is more efficient.

In another variant, MTSS can be enabled only for small blocks, i.e., MTSS is enabled for blocks verifying: $s < Th_s$.

In another variant, the number of transform candidates N in the alternative transform set is dependent on the size of the block. The following equation can be used to determine the value of N based on the threshold value $Th_n$:

$$N = \begin{cases} n, if\ s < Th_n \\ m, otherwise \end{cases}$$

where $n$ and $m$ are two fixed integer values known by both the encoder and the decoder.

In another variant, the values of $n$, $m$ and $Th_n$ are mode dependent, that is one or more of $n$, $m$ or $Th_n$ depend on the coding mode. This variant allows reducing the restrictions for coding modes where MTSS is more efficient.

All the above variants and embodiments can be applied to MTSS for intra MTS. Also, all the above variants and embodiments can be applied to control the usage of the MTSF, as well as the number nbTrSetCandidates of candidate transforms in the final transform set or the list of indices LfnstIndices[i].

Restriction based on absolute sum of transformed coefficients

In this embodiment, the usage of MTSS is restricted based on the absolute sum of transformed coefficients in the current block. All the variants described in this embodiment can be applied to both MTSS for LFNST/NSPT and MTSS for intra MTS.

In a variant, if the absolute sum of transformed coefficients C falls below a certain threshold, denoted as $Th_c$, MTSS is disabled for the current block. The underlying idea is that the impact of using an alternative transform set is less significant for blocks containing fewer transformed coefficients. Therefore, both encoding runtime and signaling cost can be saved by deactivating MTSS for these blocks.

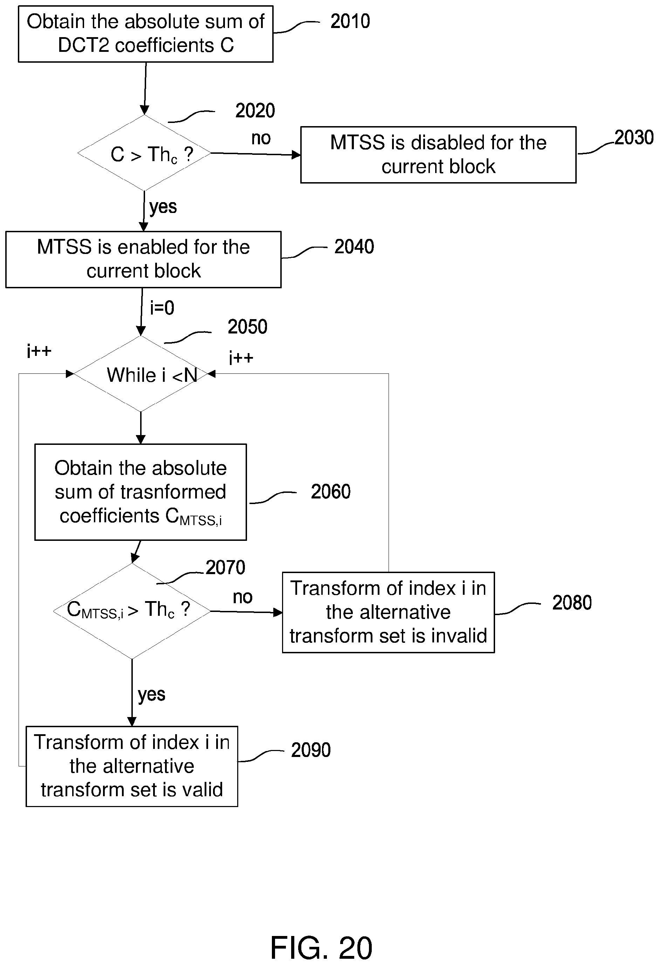

An example of the encoding process of this variant is described as follows in relation with FIG. 20. At 2010, the number of coefficients is first assessed by the absolute sum of DCT2 coefficients C in the encoder. Considering a threshold value $Th_c$, at 2020, MTSS is tested in the current block only if the following equation is true: $C > Th_c$. If MTSS is not tested at this stage, at 2030, MTSS is disabled for the current block and the MTSS flag is not transmitted for the current block.

Otherwise, if the equation is true, at 2040, MTSS is enabled for the current block.

Then, at 2060, the absolute sum of transform coefficients $C_{MTSS,i}$ is assessed for each transform of index i in the alternative transform set and used to remove transform candidates in the alternative transform set that do not validate the following equation: $C_{MTSS,i} > Th_c$.

If the equation is not satisfied for the transform of index i, then at 2080, this transform is set as invalid for the current block and cannot be used for encoding the current block, otherwise at 2090, the transform of index i is set as valid.

The goal of this check is to ensure that the decoder can infer the same decision on MTSS activation as the encoder based on the received transformed coefficients.

In a variant, the number of transform candidates N in the alternative transform set is dependent on the absolute sum of transformed coefficients C. The following equation can be used to determine the value of N based on the threshold

$$N = \begin{cases} n, if\ C < Th_c \\ m, otherwise \end{cases}$$

value $Th_c$: , where *n* and *m* are two fixed integer values known by both the encoder and the decoder.

As in FIG. 20, the absolute sum of transform coefficients $C_{MTSS,i}$ is assessed for each transform of index i in the alternative transform set to verify that the decision made based on C is still valid. To ensure the decoder can infer the same decision as in the encoder, invalid transform candidates are removed from the search.

In another variant, the threshold $Th_c$ is mode-dependent and can be used to either deactivate MTSS or to define the number of transform candidates in the alternative transform set N for the current block.

In another variant, the threshold $Th_c$ is dependent on the size of the block s and can be used to either deactivate MTSS or to define the number N of transform candidates in the alternative transform set for the current block.

In another variant, the threshold $Th_c$ is dependent on both the size s of the block and the coding mode and can be used to either deactivate MTSS or to define the number N of transform candidates in the alternative transform set for the current block.

All the above variants can be applied to MTSS for intra MTS. Similarly, all the above variants and embodiments can be applied to control the usage of the MTSF, as well as the number nbTrSetCandidates of candidate transforms in the final transform set.

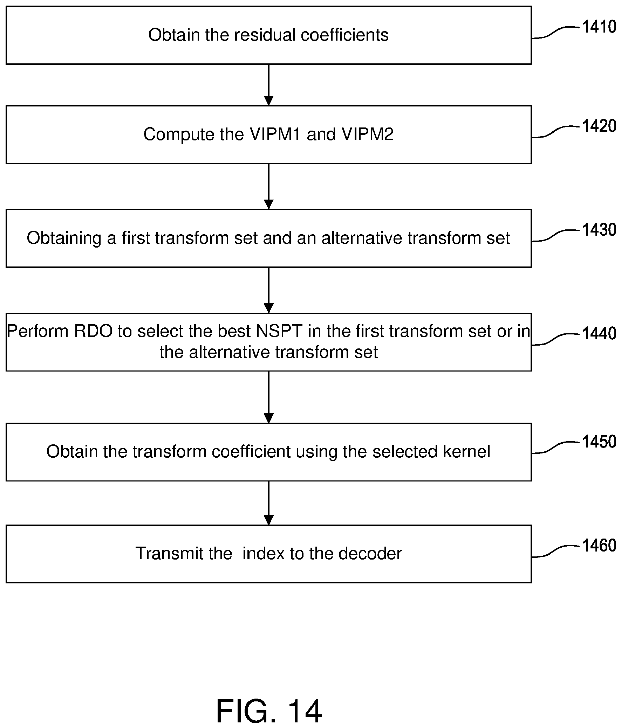

FIG. 14 illustrates an encoding method in the case of NSPT, using at least one of a first transform set or an alternative transform set, according to an embodiment. At step 1410, the encoder obtains the prediction residuals for a current block to encode. At step 1420, the virtual intra prediction modes VIPM1 and VIPM2 are computed, for example, as shown in Table 2. At step 1430, a first transform set is obtained using the first intra prediction mode VIPM1. It corresponds to the transform set associated to the first intra prediction mode VIPM1. The alternative transform set is also obtained using the second intra prediction mode VIPM2. In this embodiment, the alternative transform set is a transform set associated to the second intra prediction mode VIPM2. When obtaining the alternative transform set, the number N of transform kernels in the alternative transform set is set to a value in accordance with one of the embodiments and variants described above. The number N of transform kernels in the alternative transform set can be dependent on the coding mode, or the size of the block or the absolute sum of transformed coefficients C with respect to the threshold $Th_c$.

At step 1440, the encoder performs RDO (Rate-Distortion Optimization) to select the best NSPT kernel from the kernels in the first transform set and the alternative transform set obtained at 1430. At step 1450, the encoder transforms the prediction residuals into transform coefficients using the selected NSPT kernel. At step 1460, a flag indicating which transform set from the first transform set and the alternative transform set is selected is encoded as well as the index corresponding to the selected kernel in the selected transform set.

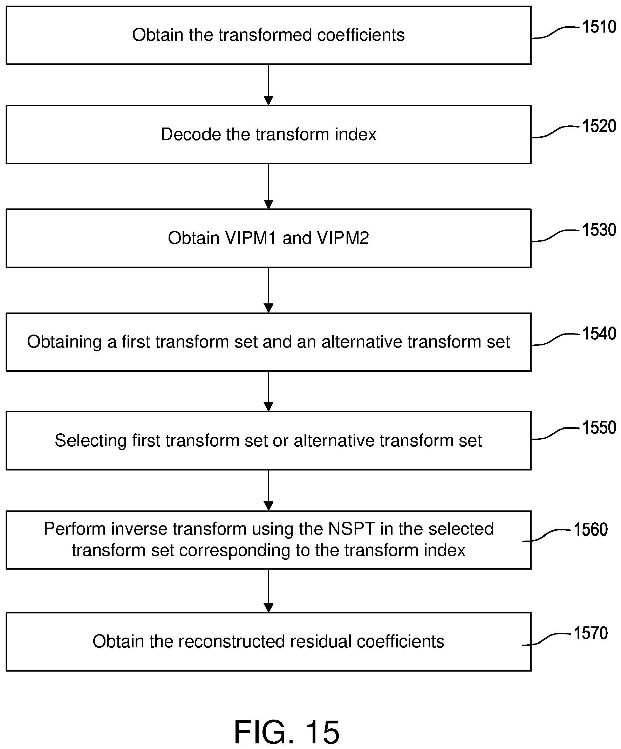

FIG. 15 illustrates a decoding method in the case of NSPT, using at least one of a first transform set or an alternative transform set, according to an embodiment. At step 1510, the decoder obtains the transform coefficients. At step 1520, the decoder decodes the flag indicating which transform set from the first transform set and the alternative transform set is selected as well as the transform index. At step 1530, the virtual intra prediction modes VIPM1 and VIPM2 are computed, for example, as shown in Table 2. At step 1540, a first transform set is obtained using the first intra prediction mode VIPM1. It corresponds to the transform set associated to the first intra prediction mode VIPM1. The alternative transform set is also obtained using the second intra prediction mode VIPM2. In this embodiment, the alternative transform set is a transform set associated to the second intra prediction mode VIPM2. When obtaining the alternative transform set, the number N of transform kernels in the alternative transform set is set to a value in accordance with one of the embodiments and variants described above. The number N of transform kernels in the alternative transform set can be dependent on the coding mode, or the size of the block or the absolute sum of decoded transformed coefficients C with respect to the threshold $Th_c$. To avoid signaling, the same embodiment and variant is used at the encoder and the decoder.

At step 1550, the NSPT transform set is selected between the first transform set and the alternative transform set based on the flag decoded at 1520. At step 1560, the decoder performs inverse transform on the transform coefficients to obtain prediction residuals, using the NSPT kernel selected in the selected transform set corresponding to the transform index decoded at 1520. At step 1570, the prediction residuals are reconstructed.

In the case of LFNST, the transform operation first applies the primary forward transform to the residuals and then the selected LFNST kernel is applied to the primary transformed coefficients at step 1450. On the decoder side, the inverse transform operation first reconstructs the primary transformed coefficients with the selected LFNST kernel, then applies the primary inverse transform to obtain the residuals at step 1560.

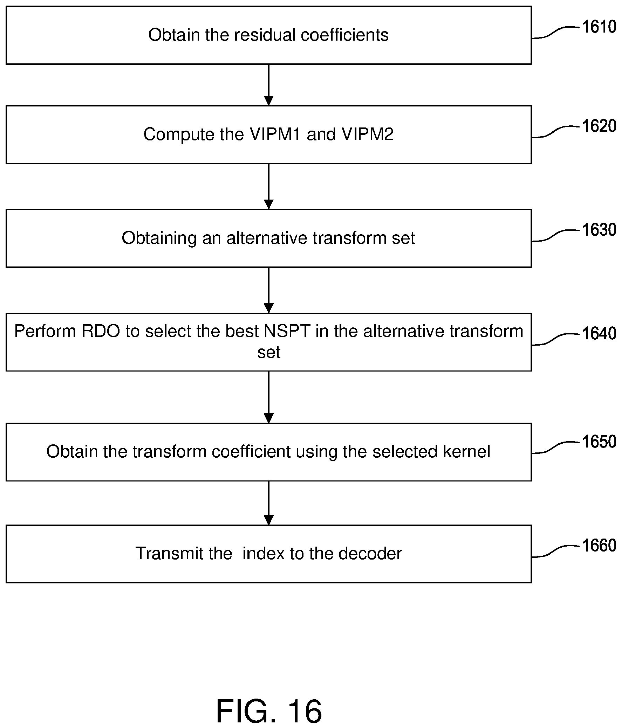

FIG. 16 illustrates an encoding method in the case of NSPT, using an alternative transform set, according to an embodiment. At step 1610, the encoder obtains the prediction residuals for a current block to encode. At step 1620, the virtual intra prediction modes VIPM1 and VIPM2 are computed, for example, as shown in Table 2. At step 1630, the alternative transform set is obtained using the MTSF method as described above in relation with FIG. 9 and 10. When obtaining the alternative transform set, the number nbTrSetCandidates of transform kernels in the alternative transform set is set to a value in accordance with one of the embodiments and variants described above. That is, the number nbTrSetCandidates of transform kernels in the alternative transform set is dependent on at least one of the coding mode of the current block, the size of the current block or the absolute sum of transformed coefficients C with respect to the threshold $Th_c$.

At step 1640, the encoder performs RDO (Rate-Distortion Optimization) to select the best NSPT kernel from the kernels in the alternative transform set obtained at 1630. At step 1650, the encoder transforms the prediction residuals into transform coefficients using the selected NSPT kernel. At step 1660, the index corresponding to the selected kernel in the alternative transform set is transmitted to the decoder.

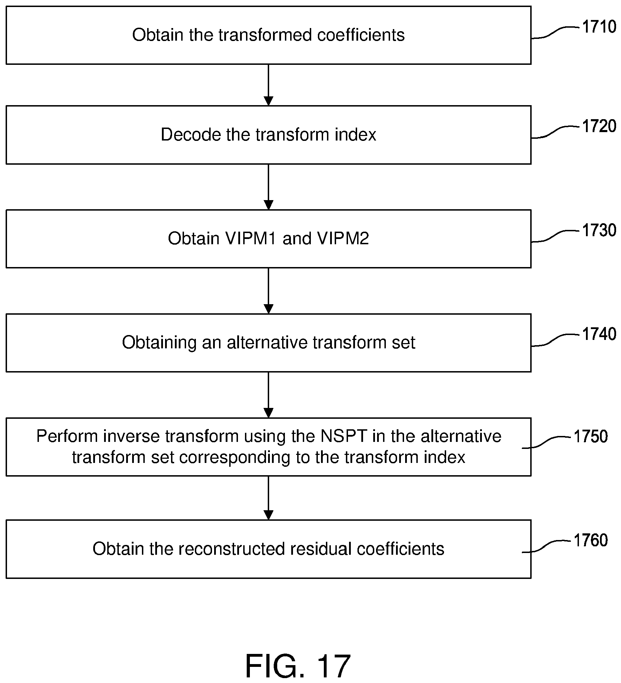

FIG. 17 illustrates a decoding method in the case of NSPT, using an alternative transform set, according to an embodiment. At step 1710, the decoder obtains the transform coefficients. At step 1720, the decoder decodes the transform index indicating the selected transform kernel in the alternative transform set. At step 1730, the virtual intra prediction modes VIPM1 and VIPM2 are computed, for example, as shown in Table 2. At step 1740, the alternative transform set is obtained using the MTSF method as described above in relation with FIG. 9 and 10. When obtaining the alternative transform set, the number nbTrSetCandidates of transform kernels in the alternative transform set is set to a value in accordance with one of the embodiments and variants described above. That is, for example the number nbTrSetCandidates of transform kernels in the alternative transform set is dependent on at least one of the coding mode of the current block, or the size of the current block. In a variant, the list of indices LfnstIndices[i] that indicates which kernel is selected from the input kernel transform sets can also be dependent on the coding mode or the block size.

At step 1750, the decoder performs inverse transform on the transform coefficients to obtain prediction residuals, using the NSPT kernel selected in the alternative transform set corresponding to the transform index decoded at 1720. At step 1760, the prediction residuals are reconstructed.

In the case of LFNST, the transform operation first applies the primary forward transform to the residuals and then the selected LFNST kernel is applied to the primary transformed coefficients at step 1650. On the decoder side, the inverse transform operation first reconstructs the primary transformed coefficients with the selected LFNST kernel, then applies the primary inverse transform to obtain the residuals at step 1750.

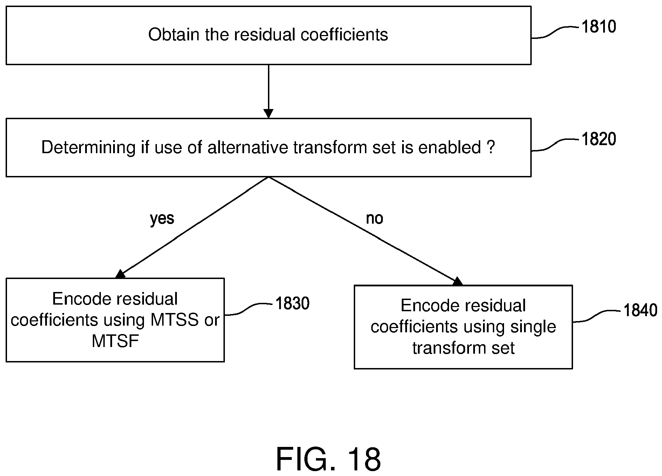

FIG. 18 illustrates an encoding method wherein MTSS is adaptively enabled, according to an embodiment. The embodiment described herein can be applied in a similar manner for adaptively enabling the use of the MTSF method described with FIG. 9-13.

At step 1810, the encoder obtains the prediction residuals for a current block to encode. At step 1820, it is determined whether MTSS is enabled or not for the current block. Enabling MTSS can be done according to any one of embodiments described above: for example: MTSS can be enabled using a flag signaled to the decoder, or based on the size of the current block with respect to the threshold $Th_s$, or based on the absolute sum of transformed coefficients C with respect to the threshold $Th_c$.

If MTSS is enabled for the current block, at 1830, the residual coefficients are encoded using MTSS. In a variant, MTSS can be used in any one of the embodiments and variants described above. If MTSS is not enabled for the current block, at 1840, the residual coefficients are encoded without MTSS, that is using a single transform set obtained from the virutal intra prediction mode derived for the current block as in ECM for example.

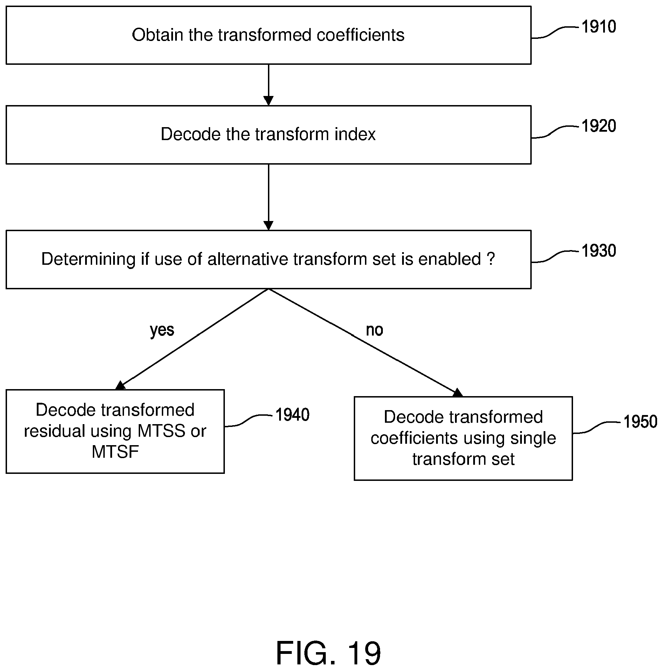

FIG. 19 illustrates a decoding method wherein MTSS is adaptively enabled, according to an embodiment. The embodiment described herein can be applied in a similar manner for adaptively enabling the use of the MTSF method described with FIG. 9-13.

At step 1910, the decoder obtains the transform coefficients. At step 1920, the decoder decodes the transform index indicating the selected transform kernel in a transform set. At step 1930, it is determined whether MTSS is enabled or not for the current block. Enabling MTSS can be done according to any one of embodiments described above: for example: MTSS can be enabled using a flag decoded by the decoder, or based on the size of the current block with respect to the threshold $Th_s$, or based on the absolute sum of transformed coefficients C with respect to the threshold $Th_c$.

If MTSS is enabled for the current block, at 1940, the transformed coefficients are reconstructed using MTSS. In a variant, MTSS can be used in any one of the embodiments and variants described above. If MTSS is not enabled for the current block, at 1950, the transformed coefficients are reconstructed without MTSS, that is using a single transform set obtained from the virtual intra prediction mode derived for the current block as in ECM for example.

In a variant, the above embodiments described in relation with FIG. 14-19 are applied to intra MTS for primary transform. In this case, the transform sets are composed of primary horizontal and vertical transform pairs and the index in the set is denoted as mts_idx.

In another variant, embodiments described in relation with FIG. 14 and 15 can be combined with embodiments described in relation with FIG. 18 and 19. Similarly, embodiments described in relation with FIG. 16 and 17 can be combined with embodiments described in relation with FIG. 18 and 19.

In the embodiments described above, the first intra prediction mode VIPM1 and the second intra prediction mode VIPM2 are angular, planar or DC intra prediction modes, and the current block is encoded or decoded in an intra mode other than an angular, planar or DC intra prediction mode or an inter mode.

In the embodiments described above, the first intra prediction mode VIPM1 and the second intra prediction mode VIPM2 correspond to a largest and a second largest magnitude of values in a histogram of gradients when the current block is encoded in a DIMD, MIP, IntraTMP, IBC, or inter mode, the first intra prediction mode VIPM1 corresponds to a split direction of partitions of the current block and the second prediction intra modeVIPM2 corresponds to an intra mode of a first or second SGPM partition when the current block is encoded in SGPM.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the transform and inverse transform modules (225, 250, 350), of a video encoder 200 and decoder 300 as shown in FIG. 2 and FIG. 3. Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method of encoding, comprising:

   obtaining a first intra prediction mode and a second intra prediction mode for a block of a picture, a first transform set being associated to the first intra prediction mode,
   obtaining an alternative transform set using at least the second intra prediction mode, wherein a number of transform kernels in the alternative transform set depends on at least one of a coding mode of the block or a size of the block;

determining a transform kernel from one of the first transform set or the alternative transform set; and encoding said block based on said transform kernel.

2. A method of decoding, comprising:

obtaining a first intra prediction mode and a second intra prediction mode for a block of a picture, a first transform set being associated to the first intra prediction mode,
obtaining an alternative transform set using at least the second intra prediction mode, wherein a number of transform kernels in the alternative transform set depends on at least one of a coding mode of the block or a size of the block;
determining a transform kernel from one of the first transform set or the alternative transform set; and
decoding said block based on said transform kernel.

3. An apparatus for encoding, comprising one or more processors configured to:

obtain a first intra prediction mode and a second intra prediction mode for a block of a picture, a first transform set being associated to the first intra prediction mode,
obtain an alternative transform set using at least the second intra prediction mode, wherein a number of transform kernels in the alternative transform set depends on at least one of a coding mode of the block or a size of the block;
determine a transform kernel from one of the first transform set or the alternative transform set; and
encode said block based on said transform kernel.

4. An apparatus for decoding, comprising one or more processors configured to:

obtain a first intra prediction mode and a second intra prediction mode for a block of a picture, a first transform set being associated to the first intra prediction mode,
obtain an alternative transform set using at least the second intra prediction mode, wherein a number of transform kernels in the alternative transform set depends on at least one of a coding mode of the block or a size of the block;
determine a transform kernel from one of the first transform set or the alternative transform set; and
decode said block based on said transform kernel.

5. The method of claim 1 or 2 or the apparatus of claim 3 or 4, wherein:

the alternative transform set is obtained based on at least said first transform set and a second transform set corresponding to the second intra prediction mode, wherein transform kernels for said alternative transform set are selected from said first and second transform sets, and wherein said alternative transform set is not signaled in a bitstream;
and the transform kernel is determined from the alternative transform kernel.

6. The method of claim 1 or 2 further comprising, or the apparatus of claim 3 or 4, wherein said one or more processors are further configured to perform:
signaling a flag indicating whether the transform kernel is determined from the first transform set or the alternative transform set, and wherein the alternative transform set is associated to the second intra prediction mode.

7. The method of any one of claims 1, 2, 5 or 6, further comprising, or the apparatus of any one of claims 3-6, wherein said one or more processors are further configured to perform:
enabling or disabling a usage of the alternative transform set depends on a coding mode of the block.

8. The method or the apparatus of claim 7, wherein the coding mode of the block is an intra mode other than an angular, planar or DC intra prediction mode or an inter mode.

9. The method of the apparatus of claim 8, wherein the coding mode of the block is on one of a DIMD, MIP, IntraTMP, IBC, SGPM, or inter mode.

10. The method or the apparatus of any one of claims 7-9, wherein a flag is signaled for each coding mode of a set of coding modes, the flag indicating whether usage of the alternative transform set is enabled for the coding mode of the set of coding modes.

11. The method or the apparatus of any one of claims 7-9, wherein enabling or disabling the usage of the alternative transform set for the block depends on whether a number of pixels in the block is above a given value, and wherein the given value depends on the coding mode of the block.

12. The method or the apparatus of any one of claims 7-9, wherein enabling or disabling the usage of the alternative transform set for the block depends on whether an absolute sum of transformed coefficients of the block is above a given value.

13. The method of any one of claims 1, 2 and 5-12, or the apparatus of any one of claims 3-12, wherein said first intra prediction mode and second intra prediction mode are angular, planar or DC intra prediction modes, and wherein said block is encoded or decoded in an intra mode other than an angular, planar or DC intra prediction mode or an inter mode.

14. The method or the apparatus of claim 13, wherein said first intra prediction mode and said second intra prediction mode correspond to a largest and a second largest magnitude of values in a histogram of gradients when said block is encoded in a DIMD, MIP, IntraTMP, IBC, or inter mode, or
said first intra prediction mode corresponds to a split direction of partitions of said block and said second prediction intra mode corresponds to an intra mode of a first or second SGPM partition when said block is encoded in SGPM.

15. A signal comprising video data, formed by performing the method of any one of claims 1 and 5-14.

FIG. 1

FIG. 2

EP 4 661 396 A1

300

FIG. 3

FIG. 4

FIG. 5

FIG. 6

FIG. 7

LFNST/NSPT LUT

| | | | |
|---|---|---|---|
| $K_1$ | $K_2$ | $K_3$ | Planar set |
| $K_1$ | $K_2$ | $K_3$ | DC set |
| $K_1$ | $K_2$ | $K_3$ | VIPM1 set |

...

| | | | |
|---|---|---|---|
| $K_1$ | $K_2$ | $K_3$ | VIPM2 - 1 set |
| $K_1$ | $K_2$ | $K_3$ | VIPM2 set |

## FIG. 8

TU → $K_1$ $K_2$ $K_3$

Final transform set

## FIG. 9

Obtain lowFreqTransMatrix    1010

Obtain LfnstTrSetCand    1020

Obtain LfnstIndices    1030

For i < nbTrSetCandidates?    1040

Set the selected LFNST kernel in the finalLfnstTrSet:
finalLfnstTrSet[i] =
lowFreqTransMatrix[LfnstTrSetCand[i]][LfnstIndices[i]]    1050

# FIG. 10

| Obtain the residual coefficients | 1110 |

| Compute the VIPM1 and VIPM2 | 1120 |

| Build the final NSPT transform set | 1130 |

| Perform RDO to select the best NSPT kernel | 1140 |

| Obtain the transform coefficient using the selected kernel | 1150 |

| Transmit the index to the decoder | 1160 |

# FIG. 11

FIG. 12

FIG. 13

Obtain the residual coefficients — 1410

Compute the VIPM1 and VIPM2 — 1420

Obtaining a first transform set and an alternative transform set — 1430

Perform RDO to select the best NSPT in the first transform set or in the alternative transform set — 1440

Obtain the transform coefficient using the selected kernel — 1450

Transmit the index to the decoder — 1460

FIG. 14

| Obtain the transformed coefficients | 1510 |

↓

| Decode the transform index | 1520 |

↓

| Obtain VIPM1 and VIPM2 | 1530 |

↓

| Obtaining a first transform set and an alternative transform set | 1540 |

↓

| Selecting first transform set or alternative transform set | 1550 |

↓

| Perform inverse transform using the NSPT in the selected transform set corresponding to the transform index | 1560 |

↓

| Obtain the reconstructed residual coefficients | 1570 |

# FIG. 15

Obtain the residual coefficients — 1610

Compute the VIPM1 and VIPM2 — 1620

Obtaining an alternative transform set — 1630

Perform RDO to select the best NSPT in the alternative transform set — 1640

Obtain the transform coefficient using the selected kernel — 1650

Transmit the index to the decoder — 1660

# FIG. 16

| Obtain the transformed coefficients | 1710 |

| Decode the transform index | 1720 |

| Obtain VIPM1 and VIPM2 | 1730 |

| Obtaining an alternative transform set | 1740 |

| Perform inverse transform using the NSPT in the alternative transform set corresponding to the transform index | 1750 |

| Obtain the reconstructed residual coefficients | 1760 |

FIG. 17

Obtain the residual coefficients — 1810

Determining if use of alternative transform set is enabled ? — 1820

yes                no

Encode residual coefficients using MTSS or MTSF — 1830

Encode residual coefficients using single transform set — 1840

FIG. 18

```
┌─────────────────────────────────────────────────────────┐
│           Obtain the transformed coefficients           │──1910
└─────────────────────────────────────────────────────────┘
                            │
                            ▼
┌─────────────────────────────────────────────────────────┐
│               Decode the transform index                │──1920
└─────────────────────────────────────────────────────────┘
                            │
                            ▼
┌─────────────────────────────────────────────────────────┐
│  Determining if use of alternative transform set is     │──1930
│                      enabled ?                          │
└─────────────────────────────────────────────────────────┘
          yes                           no
┌──────────────────────┐        ┌──────────────────────┐
│  Decode transformed  │──1940  │  Decode transformed  │──1950
│ residual using MTSS  │        │ coefficients using   │
│      or MTSF         │        │  single transform    │
│                      │        │        set           │
└──────────────────────┘        └──────────────────────┘
```

# FIG. 19

Obtain the absolute sum of DCT2 coefficients C — 2010

C > Th$_c$ ? — 2020

no → MTSS is disabled for the current block — 2030

yes

MTSS is enabled for the current block — 2040

i=0

While i <N — 2050

i++   i++

Obtain the absolute sum of trasnformed coefficients C$_{MTSS,i}$ — 2060

C$_{MTSS,i}$ > Th$_c$ ? — 2070

no → Transform of index i in the alternative transform set is invalid — 2080

yes

Transform of index i in the alternative transform set is valid — 2090

# FIG. 20

## EUROPEAN SEARCH REPORT

**Application Number**

EP 24 30 5893

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | BONNINEAU (INTERDIGITAL) C ET AL: "AHG12: Multiple Transform Set Selection for Intra MTS", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0307 ; m67917 21 April 2024 (2024-04-21), XP030317790, Retrieved from the Internet: URL:https://jvet-experts.org/doc_end_user/documents/34_Rennes/wg11/JVET-AH0307-v4.zip JVET-AH0307-v5.docx [retrieved on 2024-04-21] * the whole document * ----- | 1-15 | INV. H04N19/12 H04N19/157 H04N19/176 H04N19/593 H04N19/70 |
| X,D | WANG (OPPO) F ET AL: "Non-EE2: Multiple Transform Set Selection for LFNST/NSPT", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0062 18 January 2024 (2024-01-18), XP030313881, Retrieved from the Internet: URL:https://jvet-experts.org/doc_end_user/documents/33_Teleconference/wg11/JVET-AG0062-v2.zip JVET-AG0062-v2-clean.docx [retrieved on 2024-01-18] * the whole document * ----- -/-- | 1-15 | |

| | | TECHNICAL FIELDS SEARCHED (IPC) |
| --- | --- | --- |
| | | H04N |

The present search report has been drawn up for all claims

| Place of search | Date of completion of the search | Examiner |
|---|---|---|
| Munich | 29 October 2024 | Hindelang, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 30 5893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG2025 ; m66954 29 March 2024 (2024-03-29), XP030316747, Retrieved from the Internet: URL:https://jvet-experts.org/doc_end_user/documents/33_Teleconference/wg11/JVET-AG2025-v1.zip JVET-AG2025-v1.docx [retrieved on 2024-03-29] * sections 3.3.4, 3.3.5, 3.3.6 * ----- | 1-15 | |
| X | WO 2024/104476 A1 (DOUYIN VISION CO LTD [CN]; BYTEDANCE INC [US]) 23 May 2024 (2024-05-23) * sections 2.2.2 (pages 60 - 62), 2.2.6, 2.2.7 (pages (66 - 68), 4.5 (pages 85 to 92); paragraph [0122] * ----- | 1-4,15 | |
| | | | **TECHNICAL FIELDS SEARCHED (IPC)** |

The present search report has been drawn up for all claims

| Place of search | Date of completion of the search | Examiner |
|---|---|---|
| Munich | 29 October 2024 | Hindelang, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5893

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2024

| Patent document cited in search report | Publication date | Patent family member(s) | Publication date |
|---|---|---|---|
| WO 2024104476 A1 | 23-05-2024 | NONE | |

For more details about this annex : see Official Journal of the European Patent Office, No. 12/82

**EP 4 661 396 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. WANG**. Non-EE2: Multiple Transform Set Selection for LFNST/NSPT. *JVET-AG0062*, January 2024

- **C. BONNINEAU**. AHG12: Multiple Transform Set Selection for intra MTS. *JVET-AH0307*, April 2024